# FASCICULE DE BREVET EUROPEEN

(11) **EP 1 379 023 B1**
(45) Date de publication et mention de la délivrance du brevet: **30.05.2007**
(21) Numéro de dépôt: 03300046.4
(22) Date de dépôt: 02.07.2003
(51) Int. Cl.: H04L 9/06

(54) **Chiffrement/déchiffrement exécuté par un circuit intégré masquant une transformation non linéaire du type SUBBYTE**
Verschlüsselung und Entschlüsselung in einem Schaltkreis, bei der eine nichtlineare Transformation wie die SUBBYTE-Operation maskiert wird
En- and Decryption Method executed by an integrated Circuit masking a nonlinear transformation as the SUBBYTE operation

(30) Priorité: 02.07.2002 FR 0208268
(43) Date de publication de la demande: 07.01.2004
(73) Titulaire: ST MICROELECTRONICS S.A., 92120 Montrouge (FR)
(72) Inventeur: Liardet, Pierre-Yvan, 13790 Peynier (FR); Romain, Fabrice, 13090 Aix en Provence (FR); Teglia, Yannick, 13011 Marseille (FR); Sirtori, Laurence, 13530 Trets (FR)
(74) Mandataire: de Beaumont, Michel

(56) Documents cités:
- EP-A- 0 981 223
- EP-A- 1 109 350
- WO-A-00/41356
- AKKAR M-L ET AL: "AN IMPLEMENTATION OF DES AND AES, SECURE AGAINST SOME ATTACKS" CRYPTOGRAPHIC HARDWARE AND EMBEDDED SYSTEMS. 3RD INTERNATIONAL WORKSHOP, CHES 2001, PARIS, FRANCE, MAY 14 - 16, 2001 PROCEEDINGS, LECTURE NOTES IN COMPUTER SCIENCE, BERLIN: SPRINGER, DE, vol. 2162, 2001, pages 309-318, XP008002641 ISBN: 3-540-42521-7
- KOCHER P ET AL: "Differential power analysis" CONF¹RENCE CRYPTO '99, 1999, pages 388-397, XP000279852

## Description

La présente invention concerne le domaine du chiffrement de données numériques au moyen d'algorithmes destinés à masquer des données d'origine afin de les rendre indétectables par un pirate éventuel. L'invention concerne plus particulièrement les algorithmes mettant en oeuvre une même transformation sur différentes parties des données à coder.

Les algorithmes de chiffrement/déchiffrement auxquels s'applique la présente invention sont généralement exécutés par des circuits intégrés, soit au moyen de machines d'états en logique câblée, soit au moyen de microprocesseurs exécutant un programme en mémoire (généralement une mémoire morte). De tels algorithmes utilisent des clés secrètes propres aux circuits intégrés ou à l'utilisateur, qui sont exploitées par l'algorithme pour coder les données.

Un exemple d'algorithme de chiffrement/déchiffrement auquel s'applique tout particulièrement la présente invention est un algorithme connu sous la dénomination AES (Advanced Encryption Standard, FIPS PUB 197). Cet algorithme applique à un mot ou code de données découpé en blocs, une même transformation plusieurs fois de suite à partir de clés de chiffrement différentes ou, plus précisément, de parties d'un mot binaire constituant une clé.

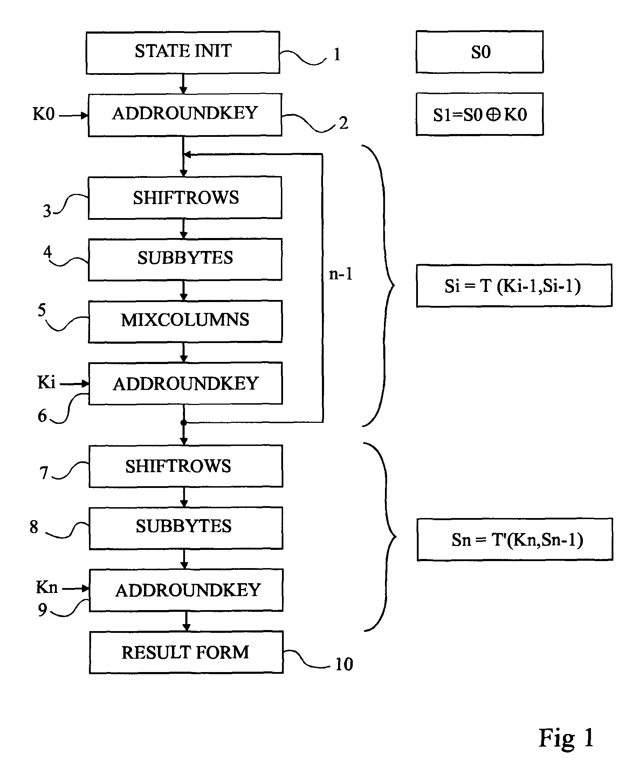

La figure 1 illustre, par un organigramme simplifié, les étapes principales d'un algorithme classique de type AES. On se contentera de décrire le chiffrement, le déchiffrement reprenant les transformations inverses.

Cet algorithme chiffre un mot ou code S₀ d'un nombre de bits prédéterminé (généralement, 128 bits) en un autre mot ou code Sₙ de même taille. Les données à chiffrer sont en fait constituées de plusieurs mots ou codes résultant d'un découpage préalable des données en mots ayant tous la même taille. Le chiffrement et le déchiffrement reposent sur une clé secrète dont la longueur (généralement de 128 à 256 bits) conditionne la sécurité du chiffrement.

En pratique, chaque étape d'un algorithme de type AES traite une matrice de quatre lignes et quatre colonnes, représentant un mot et dont chaque élément est un octet ou bloc du code de 128 bits traité. Pour simplifier la description qui va suivre, on fera référence, pour chaque étape, à un état considéré comme étant une matrice.

Pour la mise en oeuvre de l'algorithme de chiffrement ou de déchiffrement, on commence par produire, à partir de la clé secrète sur 128 bits, 11 sous-clés comprenant chacune également 128 bits. De façon plus générale, à partir d'une clé secrète d'un nombre m de bits, on dérive n+1 sous-clé K0, ... Ki, ... Kn de m bits chacune. Ces sous-clés sont destinées à être utilisées par l'algorithme comme cela sera décrit ci-après en relation avec la figure 1.

On part d'un état initial (bloc 1, STATE INIT) S₀ du code ou mot de données à chiffrer.

Une première phase du procédé de chiffrement est une opération (bloc 2, ADDROUNDKEY) dite de "blanchiment" qui consiste à effectuer une combinaison de type OU-Exclusif (XOR) de l'état initial S₀ avec la première sous-clé K0. On obtient un premier état intermédiaire S₁.

Une deuxième phase du procédé de chiffrement consiste à effectuer plusieurs tours ou cycles d'une même transformation T faisant intervenir, à chaque tour, l'état Sᵢ₋₁ obtenu au tour précédent et une sous-clé courante Ki. Le nombre de tours de la transformation T correspond à n-1, c'est-à-dire au nombre de sous-clés dérivées, diminué de 2.

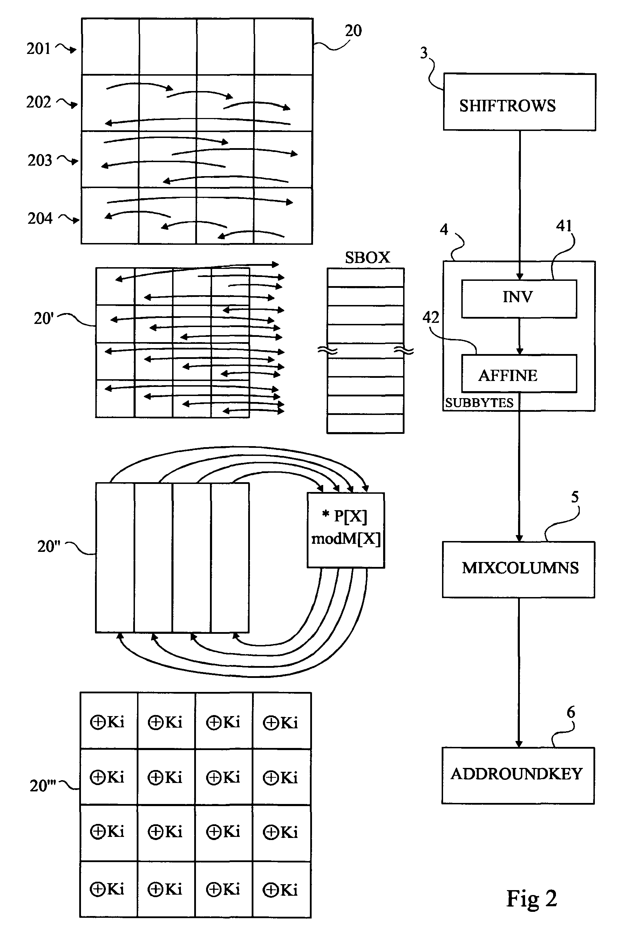

Chaque transformation de tour T est constituée de quatre opérations appliquées successivement. La figure 2 illustre plus en détail ces quatre opérations sur une matrice 20 de quatre lignes et quatre colonnes d'octets binaires à laquelle s'applique un algorithme de type AES.

Une première étape (bloc 3, SHIFTROWS) consiste à opérer une rotation sur les trois dernières lignes de la matrice 20. La première ligne 201 de la matrice 20 demeure inchangée. La deuxième ligne 202 subit une rotation d'un octet. La troisième ligne 203 subit une rotation de deux octets. La quatrième ligne 204 subit une rotation de trois octets.

Une deuxième étape (bloc 4, SUBBYTES) de la transformation de tour T constitue une transformation non linéaire dans laquelle chaque octet de la matrice 20' constituant l'état courant est remplacé par son image prise dans une table de substitution (SBOX). Comme l'illustre la figure 2, la table de substitution SBOX est obtenue par deux transformations successives. Une première transformation (bloc 41, INV) consiste à inverser l'octet considéré (l'élément de la matrice 20') dans le corps fini d'ordre 2⁸ (pour correspondre à l'octet), l'octet 00 constituant sa propre image. Cette inversion est suivie d'une transformation affine (bloc 42, AFFINE).

Des exemples de transformation non-linéaire de substitution telle que celle exposée ci-dessus sont décrits, par exemple dans l'ouvrage "The Design of Rijndael" de Joan Daemen et Vincent Rijmen, paru aux éditions Springer-Verlag (ISBN 3-540-42580-2) et dans la norme AES (FIPS PUB 197).

La troisième étape (bloc 5, MIXCOLUMNS) de la transformation de tour T consiste à considérer chaque colonne de la matrice 20" issue de l'étape précédente comme un polynôme sur le corps fini d'ordre 2⁸, et à multiplier chacun de ces polynômes par un polynôme de combinaison P[X] modulo un polynôme M[X].

La quatrième et dernière étape de la transformation de tour T de rang i consiste à appliquer la sous-clé Ki à la matrice résultante 20" de l'état précédent pour obtenir une matrice 20"', dans laquelle chaque élément de la matrice 20" a été combiné par un OU-Exclusif, bit à bit, avec la sous-clé Ki (bloc 6, ADDROUNDKEY). Cette étape 6 est la même que l'étape 2 de la première phase du chiffrement, mais effectuée avec une sous-clé différente.

A l'issue de l'étape 6, on obtient, pour un tour de rang i, un état Sᵢ=T(Ki, Sᵢ₋₁). Les quatre étapes de la transformation de tour sont répétées n-1 fois, c'est-à-dire qu'après l'étape 6, on revient à l'étape 3 pour ré-effectuer un tour avec une clé suivante.

La troisième phase de l'algorithme de chiffrement (figure 1) consiste en quelque sorte en un dernier tour, légèrement modifié par rapport à celui illustré par la figure 2. En fait, on reproduit les étapes de la transformation de tour à l'exception de la troisième (MIXCOLUMNS). Cela revient à effectuer successivement des étapes 7, 8 et 9 correspondant aux étapes 3, 4 et 6 décrites précédemment avec, comme clé pour l'étape 9, la dernière sous-clé Kn.

On obtient alors l'état Sₙ=T'(Kn, Sₙ₋₁). Ce résultat est finalement mis en forme (bloc 10, RESULTFORM) pour utilisation ultérieure.

Une faiblesse connue des implémentations sur carte à puce des algorithmes de type AES, ou plus généralement des algorithmes mettant en oeuvre plusieurs tours ou cycles d'une même transformation (T) sur un code découpé en blocs, est la sensibilité aux attaques par analyse de la consommation en courant du circuit exécutant l'algorithme. Une telle attaque connue sous la dénomination DPA (Differential Power Analysis) consiste à corréler la consommation du circuit intégré exécutant l'algorithme avec les clés secrètes utilisées lors du chiffrement ou du déchiffrement. En pratique, à partir d'un message à chiffrer et d'hypothèses sur la clé secrète, on établit une courbe de corrélation statistique en fonction du temps entre la consommation du produit pour le chiffrement du message et une valeur intermédiaire calculée par le circuit. De telles attaques en consommation sont décrites dans la littérature (voir par exemple, l'article "Differential Power Analysis" de Paul Kocher, Joshua Jaffe et Benjamin Jun, paru en 1999, Conférence CRYPTO 99, pages 388-397, publié par Springer-Verlag LNCS 1666).

Une solution connue, pour rendre les algorithmes plus résistants contre des attaques par analyse de la consommation du circuit intégré, consiste à faire intervenir un nombre aléatoire dans l'exécution de l'algorithme. Le recours à une valeur aléatoire consiste à masquer l'état au début de l'algorithme par cette valeur aléatoire et à rétablir le résultat escompté à la fin de l'algorithme.

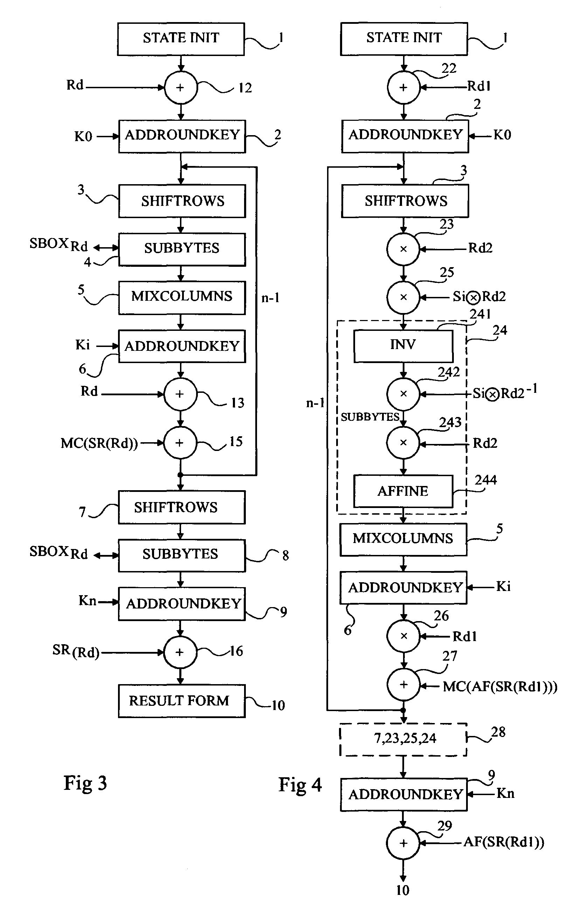

La figure 3 illustre, de façon partielle et très schématique, une première technique connue d'introduction d'un nombre aléatoire Rd dans l'exécution d'un algorithme de type AES. Partant d'un état initial de la matrice (bloc 11, STATEINIT), on effectue une combinaison de type OU-Exclusif bit à bit (bloc 12, +) par un nombre aléatoire Rd. Ce nombre est donc introduit avant l'étape 2 de combinaison avec la première sous clé K0. On doit ensuite tenir compte de ce nombre aléatoire Rd à certains stades de l'algorithme. Tout d'abord, lors des étapes 4 et 8 de transformation non linéaire (SUBBYTES), on doit utiliser une table de substitution (SBOX_{Rd}) tenant compte du nombre aléatoire. Puis, à chaque transformation de tour, après l'introduction de la clé courante Ki (étape 6), on doit effectuer une combinaison (bloc 13, +) de type OU-Exclusif avec le nombre Rd. De plus, après l'étape 13, on combine (bloc 15, +) par un OU-Exclusif le résultat obtenu avec une grandeur MC(SR(Rd)) correspondant à l'application des fonctions SR de décalage de lignes (SHIFTROWS) et MC de mélange de colonne (MIXCOLUMNS) au nombre Rd.

Après la dernière transformation T', la combinaison (bloc 16, +) par un OU-Exclusif du résultat obtenu avec la valeur SR(Rd) correspondant à l'application du décalage de lignes à la valeur Rd permet de retrouver le résultat escompté.

Le recours obligatoire à une table de substitution fonction du nombre aléatoire oblige de recalculer cette table à chaque chiffrement ou déchiffrement. Ce recalcul des tables de substitution, nécessaire pour obtenir une bonne résistance aux attaques DPA, entraîne un besoin de mémoire important dans le circuit intégré et allonge le temps d'exécution de l'algorithme par le temps de calcul nécessaire. Par exemple, pour des codes (matrices) sur 128 bits, le recalcul d'une table de substitution SBOX_{Rd} pour chaque octet de l'état requiert 16 tables de 256 octets, ce qui représente 4 kilo-octets de mémoire. Une telle mémoire est loin d'être négligeable lorsqu'elle est intégrée, par exemple, dans une carte à puce.

La figure 4 illustre une deuxième solution classique pour faire intervenir une valeur aléatoire dans un algorithme de chiffrement de type AES. Cette solution est décrite dans l'article "An implementation of DES and AES, secure against some attacks" de M.L. Akkar et C. Giraud publié à la conférence CHES 2001 (éditions Springer-Verlag).

Cette solution consiste à remplacer le recours à des tables de substitution par des transformations calculées à chaque tour de l'algorithme. Le résultat est le même, en ce sens qu'il conduit à une substitution des différents octets de la matrice. Ce qui change, c'est la manière d'obtenir cette substitution.

Selon cette solution, on utilise deux nombres aléatoires Rd1 et Rd2 que l'on fait intervenir à différentes étapes de l'algorithme. Le premier nombre aléatoire Rd1 intervient au départ (entre les blocs 1 et 2) et est additionné (combinaison de type OU-Exclusif 22). La deuxième valeur aléatoire Rd2 est introduite dans les transformations de tour qu'il s'agisse des n-1 transformations identiques T ou de la dernière transformation T'.

Le résultat issu de l'étape 3 ou 7 de décalage de ligne est combiné par une multiplication polynomiale 23 à coefficients sur le corps fini d'ordre 2⁸ (modulo un polynôme irréductible) avec la valeur aléatoire Rd2. Puis, la matrice résultante obtenue est additionnée (combinaison de type OU-Exclusif) à une matrice représentant le résultat de l'opération précédente (Sᵢ*Rd2). Cette addition est symbolisée par un bloc 25 en figure 4.

Les deux opérations précédentes sont effectuées avant l'étape 24 de substitution d'octets qui comprend ici essentiellement deux transformations. Une première transformation (bloc 241, INV) consiste à inverser chaque octet de la matrice résultante de l'étape 25. Puis, on additionne (OU-Exclusif) à cette matrice inverse (bloc 242, +), le produit (octet par octet modulo un polynôme irréductible) de l'état initial Sᵢ par l'inverse (Rd2⁻¹) de la valeur aléatoire. Le résultat est ensuite multiplié (bloc 243, X) par la valeur aléatoire Rd2. Là encore, il s'agit d'une multiplication polynomiale. Enfin, la dernière étape de la substitution d'octets 24 de la matrice consiste en une transformation affine 244 (AFFINE). En sortie de l'étape 24, la matrice résultante est soumise à l'étape d'addition de la sous-clé correspondante (étape 6 ou 9).

Si on est dans une transformation de tour, l'étape suivant l'étape 24 est l'étape 5 (MIXCOLUMNS). Puis, après l'étape 6, on combine (bloc 26, +) par un OU-Exclusif le résultat obtenu avec la valeur Rd1. Le résultat de l'addition 26 est combiné (bloc 27), toujours par un OU-Exclusif, avec le résultat (MC(AF(SR(Rd1)))) du traitement polynomial de mélange de colonnes (MC) de la transformation affine AF appliquée au décalage de ligne SR appliqué à la valeur Rd1.

Si l'on est dans la dernière transformation T', l'étape suivant l'étape 24 est l'étape 9 avec la clé Kn. Enfin, on combine (bloc 29, +) par un OU-Exclusif le résultat obtenu avec le résultat (AF(SR(Rd1))) de la transformation affine AF appliquée au décalage de ligne SR appliqué à la valeur Rd1. La sortie du bloc 29 fournit l'état devant être mis en forme par l'étape 10.

Une telle solution requiert moins de mémoire que la première solution classique illustrée en relation avec la figure 3. Toutefois, elle augmente considérablement le temps d'exécution de l'algorithme. En effet, à chaque tour de l'algorithme, l'opération correspondant à la substitution devient complexe et requiert de nombreuses opérations modulo un polynôme.

Le problème de traitement par un nombre aléatoire vient essentiellement du fait que, dans un algorithme du type auquel l'invention s'applique, l'opération de substitution est une opération non linéaire.

La présente invention vise à proposer une nouvelle solution à l'introduction d'au moins une grandeur aléatoire dans un algorithme de chiffrement de type AES qui pallie les inconvénients des solutions connues. Plus généralement, l'invention vise à proposer l'introduction d'au moins une valeur aléatoire dans un algorithme faisant subir à un code ou mot d'entrée, découpé en blocs, plusieurs fois la même transformation (par matrice de substitution) avec des clés différentes.

L'invention vise également à proposer une solution qui minimise le nombre de fois qu'une table de substitution doit être calculée et/ou mémorisée.

L'invention vise également à minimiser le temps de calcul nécessaire à l'exécution de l'algorithme suite à l'introduction du nombre aléatoire.

Pour atteindre ces objets et d'autres, la présente invention prévoit un procédé de chiffrement et/ou déchiffrement, par un circuit intégré, d'un code numérique d'entrée au moyen de plusieurs clés, consistant :
à découper ledit code en plusieurs blocs de données de mêmes dimensions ; et
à appliquer auxdits blocs plusieurs tours de chiffrement ou déchiffrement consistant à faire subir à chaque bloc au moins une même transformation non linéaire et à combiner ultérieurement chaque bloc avec une clé différente à chaque tour,
les opérandes étant masqués, lors de l'exécution du procédé, au moyen d'au moins un premier nombre aléatoire ayant la taille dudit code et dont tous les blocs ont la même valeur en combinant, par une fonction de type OU-Exclusif, les blocs d'entrée et de sortie de la transformation non linéaire avec ledit nombre aléatoire.

Selon un mode de mise en oeuvre de la présente invention, le code d'entrée est combiné avec un deuxième nombre aléatoire de même dimension que ce code.

Selon un mode de mise en oeuvre de la présente invention, ladite transformation non linéaire consiste à utiliser une table de substitution des blocs du code d'entrée, calculée avec un troisième nombre aléatoire de même longueur que ledit code et dont tous les blocs ont la même valeur. Selon l'invention, ladite table respecte le fait que la transformation d'un code d'entrée, préalablement combiné par un OU-Exclusif avec le premier nombre aléatoire, correspond au résultat de la combinaison par un OU-Exclusif de ce code d'entrée avec ledit troisième nombre aléatoire.

Selon un mode de mise en oeuvre de la présente invention, le procédé est appliqué à un algorithme de chiffrement de type AES.

Selon un mode de mise en oeuvre de la présente invention, ledit premier nombre aléatoire est changé à chaque tour de chiffrement.

Selon un mode de mise en oeuvre de la présente invention, ledit deuxième nombre aléatoire est changé à chaque chiffrement d'une nouvelle donnée.

Selon un mode de mise en oeuvre de la présente invention, ledit troisième nombre aléatoire est changé à chaque tour de chiffrement.

L'invention prévoit également un circuit intégré comprenant un bloc de chiffrement/déchiffrement en plusieurs tours d'une donnée d'entrée découpée en blocs de mêmes dimensions, comportant :
des moyens de génération d'au moins un premier nombre aléatoire de même taille que la taille des blocs de la donnée d'entrée ; et
des moyens de combinaison dudit nombre aléatoire avec chaque bloc, en entrée et en sortie d'une transformation non linéaire mise en oeuvre par le chiffrement/déchiffrement.

Ces objets, caractéristiques et avantages, ainsi que d'autres de la présente invention seront exposés en détail dans la description suivante de modes de mise en oeuvre de réalisation particuliers faite à titre non-limitatif en relation avec les figures jointes parmi lesquelles :
la figure 1 décrite précédemment illustre par un organigramme schématique, un procédé de chiffrement classique du type auquel s'applique la présente invention ;
la figure 2 décrite précédemment illustre les traitements opérés sur un état matriciel dans une transformation de tour du procédé de la figure 1 ;
la figure 3 décrite précédemment représente les étapes d'un premier procédé classique de prise en compte d'un nombre aléatoire dans un algorithme de chiffrement du type de celui illustré par la figure 1 ;
la figure 4 décrite précédemment représente une deuxième solution classique d'introduction de nombres aléatoires dans un algorithme de chiffrement du type de celui représenté en figure 1 ;
la figure 5 illustre, par un organigramme schématique, un mode de réalisation d'un algorithme de chiffrement selon la présente invention ; et
la figure 6 représente, par un organigramme schématique, un mode de mise en oeuvre d'un procédé de déchiffrement selon la présente invention.

Pour des raisons de clarté, seules les étapes qui sont nécessaires à la compréhension de l'invention ont été représentées aux figures et seront décrites par la suite. En particulier, les traitements en amont et en aval de l'algorithme de chiffrement n'ont pas été détaillés et ne font pas l'objet de l'invention. De plus, les opérations de subdivision de la quantité secrète en plusieurs sous-clés à prendre en compte par l'algorithme, ainsi que la génération des nombres aléatoires adaptés n'ont pas été détaillées et sont à la portée de l'homme du métier à partir des indications qui seront données ci-après.

Selon l'invention, on utilise une grandeur aléatoire ayant la même taille que l'état à chiffrer (la matrice) pour les transformations traitant plusieurs octets en même temps ou qui les mélangent entre eux, comme c'est le cas pour les transformations de type mélange de colonnes, introduction de sous-clé et décalage de lignes.

Par contre, on n'utilise pas cette grandeur aléatoire pour les fonctions non linéaires, telles que celle mise en oeuvre pour la substitution d'octets par une table de substitution dans le cas considéré. Selon l'invention, on masque la table de substitution par une autre valeur aléatoire dont les octets (ou plus généralement les blocs d'une taille correspondant à la taille des blocs du code pris en compte dans la table de substitution) sont tous identiques. Bien qu'elle soit donc effectuée au moyen d'une grandeur aléatoire d'un octet, une telle opération de masquage est efficace dans la mesure où, grâce au masquage complet des fonctions opérant sur la totalité du bloc, il n'est pas possible pour un pirate d'exploiter cette particularité au travers d'une fonction de corrélation. Selon une variante de réalisation, on utilise également une valeur pseudoaléatoire, liée à cette valeur aléatoire, pour masquer la table de substitution.

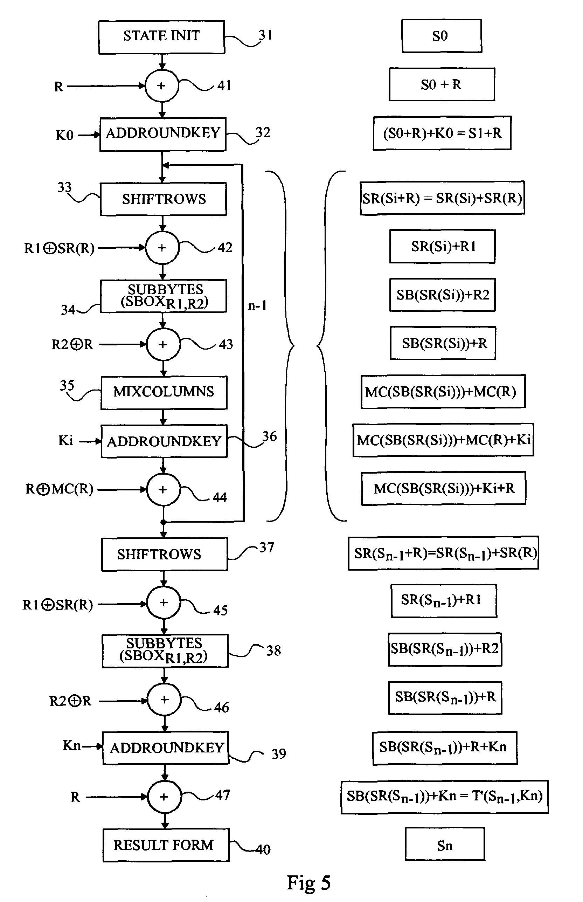

La figure 5 représente un organigramme d'un mode de mise en oeuvre d'un algorithme de type AES, masqué au moyen de valeurs aléatoires et/ou pseudoaléatoires selon la présente invention.

Dans la description qui suit, on fera référence aux tailles de mots binaires en prenant l'exemple d'un algorithme AES utilisant une clé de 128 bits et un découpage d'un code d'entrée de 128 bits sous la forme d'une matrice de quatre lignes et de quatre colonnes d'octets. On notera cependant que tout ce qui sera décrit par la suite s'applique quel que soit la taille des clés et des codes d'entrée et de sortie, pourvu que les relations éventuelles entre ceux-ci soient respectées. En particulier, on notera que la taille des valeurs aléatoires (le cas échéant pseudoaléatoires) utilisées pour la table de substitution doit correspondre à la taille d'un élément de la matrice, alors que la taille de la valeur aléatoire (le cas échéant pseudoaléatoire) utilisée pour les transformations linéaires doit correspondre à la taille d'un état d'entrée complet. Par définition, on désigne par l'addition, une combinaison de type OU-Exclusif et par la multiplication, une multiplication polynomiale modulo un polynôme irréductible.

En partie gauche de la figure 5 ont été représentées les étapes successives de l'algorithme de chiffrement tandis qu'en partie droite de cette figure ont été indiqués les états obtenus à l'issue de chaque étape.

On part d'un état initial (bloc 31, STATE INIT). Cet état S₀ correspond au code (données) à chiffrer par l'algorithme.

La première étape 41 consiste à effectuer une combinaison de type OU-Exclusif de l'état S₀ avec une valeur aléatoire R dont la taille est la même que l'état S₀ (par exemple, 128 bits).

Puis, on exécute une étape classique 32 d'addition de sous-clé (bloc 32, ADDROUNDKEY) par une combinaison de type OU-Exclusif de la première sous-clé K0 avec le résultat de l'étape précédente. L'état obtenu correspond à l'état S₁+R.

On entre alors dans la deuxième phase du procédé de chiffrement consistant à exécuter n-1 tours d'une même transformation T. Cette transformation fait intervenir les étapes du procédé classique (dans cet exemple, l'AES) que l'on souhaite masquer par au moins une valeur aléatoire. Dans l'exemple représenté, il s'agit des étapes successives 33 de décalage de lignes (SHIFTROWS), 34 de substitution d'octets (SUBBYTES) au moyen d'une table de substitution SBOX, 35 de mélange de colonnes (MIXCOLUMNS) et 36 de combinaison de type OU-Exclusif (ADDROUNDKEY) avec la sous-clé Ki de rang i.

Selon l'invention, entre ces étapes, on introduit deux valeurs aléatoires R1 et R2 (le cas échéant, R1=R2) constituées chacune de suites d'octets de même valeur. Le nombre (par exemple, 16) d'octets de chaque valeur correspond au nombre d'octets d'un état traité (par exemple, 128 bits).

En sortie de l'étape 33, on obtient une matrice ayant des lignes décalées à partir de la matrice d'état Sᵢ combinée à la grandeur aléatoire R. En désignant par SR la fonction de décalage de lignes, on peut écrire que l'on obtient à l'issue de l'étape 33 : SR(Sᵢ+R)=SR(Sᵢ)+SR(R).

Selon l'invention, avant d'effectuer la substitution de l'étape 34, on combine (bloc 42) l'état SR(Sᵢ)+SR(R) avec une valeur de même taille (R1+SR(R)) correspondant à l'application du décalage de ligne à la valeur aléatoire R (SR(R)) combinée, octet par octet, par un OU-Exclusif avec la valeur aléatoire R1. En d'autres termes, l'état est masqué par une valeur de même taille dont chaque octet a la même valeur aléatoire.

On exécute alors l'étape 34 de substitution octet par octet au moyen de la table de substitution SBOX_{R1,R2}. Cette table est, selon l'invention, fonction de la valeur R2 et est liée à la valeur R1 en respectant la relation suivante :

SB(Sᵢ+R1)=SBOX(Sᵢ)+R2, où SBOX représente la table de substitution de l'algorithme que l'on souhaite masquer et SB désigne la fonction de substitution d'octets (SUBBYTES). En d'autres termes, on calcule une nouvelle table de substitution SB à partir de la table SBOX de l'algorithme que l'on souhaite masquer par les valeurs R1 et R2.

Au résultat (SB(SR(Sᵢ))+R2) de l'étape 34 qui correspond à un état masqué par la valeur R2 (chaque octet de la matrice est masqué par un octet de même valeur), on applique une combinaison de type OU-Exclusif (bloc 43) avec la combinaison OU-Exclusif R2+R (octet par octet) de la valeur sur 128 bits R et de l'octet R2.

Le résultat (SB(SR(Sᵢ))+R) subit la transformation 35 de mélange de colonnes de l'algorithme classique. Toujours en respectant l'algorithme classique, la sous-clé Ki est introduite par l'étape 36 de combinaison de type OU-Exclusif avec la matrice précédente. Le résultat MC(SB(SR(Sᵢ)))+MC(R)+Ki, où MC désigne la fonction de mélange de colonnes MIXCOLUMNS, est combiné (bloc 44) avec une matrice correspondant à la somme (combinaison de type OU-Exclusif) de la grandeur aléatoire R et de cette même grandeur MC(R) ayant subi une transformation de mélange de colonnes identique à la transformation 35.

La transformation cyclique se termine par cette étape 44 à l'issue de laquelle, selon le rang i, on revient en étape 33 pour une nouvelle itération ou l'on passe à l'étape 37 de décalage de lignes (SHIFTROWS) de la dernière transformation T'.

Là encore, l'invention consiste à intercaler, entre certaine étapes de l'algorithme dont on souhaite masquer l'exécution par des valeurs aléatoires, des combinaisons logiques des matrices traitées par les grandeurs R1 et R2.

La transformation par matrice de substitution 38 est identique à celle décrite en relation avec l'étape 34, mais encadrée par des combinaisons 45 et 46. Ces combinaisons sont identiques aux combinaisons 42 et 43 décrites précédemment, en amont et en aval de la transformation 34.

A l'issue de l'étape 46, la matrice obtenue SB(SR(Sₙ₋₁))+R est combinée avec la dernière sous-clé Kn (bloc 39). Puis, on rétablit le résultat escompté (SB(SR(Sₙ₋₁))+Kn=T'(Sₙ₋₁, Kn) en recombinant (bloc 47, +) par un OU-Exclusif la matrice obtenue par la première grandeur aléatoire R de même taille que cette matrice. On met alors en forme le résultat Sₙ de façon classique (bloc 40, RESULTFORM).

Un avantage de la présente invention est que les quantités R1 et R2 ainsi que la table de substitution SBOX peuvent être recalculées à chaque tour T de la transformation cyclique ou à chaque chiffrement ou déchiffrement de la donnée d'entrée par l'algorithme complet.

Un autre avantage de l'invention est qu'une mémoire correspondant au double de la matrice à traiter est suffisante pour stocker les nouvelles tables de substitution (l'ancienne et la nouvelle) dans la mesure où celles-ci sont combinées avec une valeur aléatoire dont la taille correspond à celle d'un élément de la matrice.

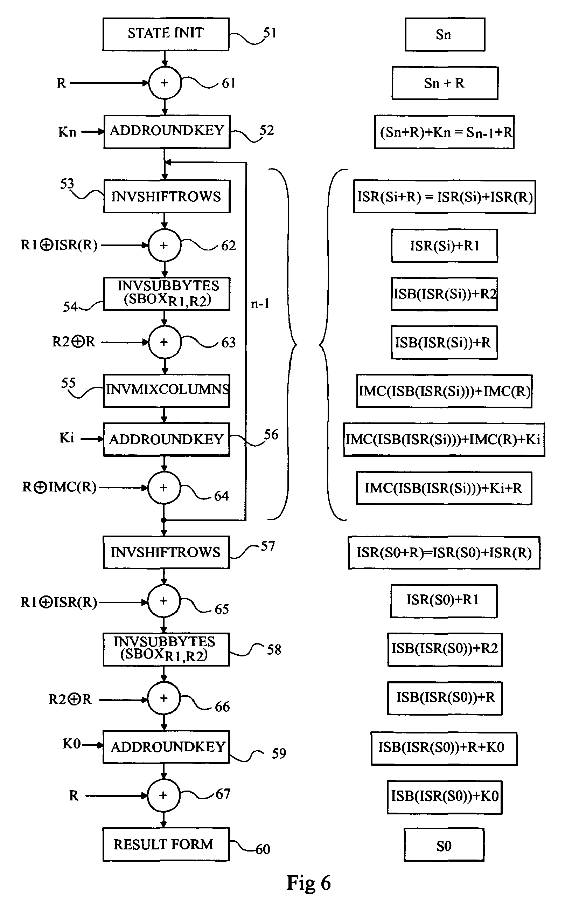

La figure 6 représente, sous forme d'organigramme simplifié, un mode de mise en oeuvre d'un algorithme de déchiffrement d'une donnée Sₙ selon l'invention.

Comme dans l'algorithme dont on souhaite masquer l'exécution par les valeurs aléatoires, le déchiffrement reprend les étapes inverses à celles du chiffrement à l'exception des étapes d'introduction des clés ou sous-clés Ki, qui s'effectue dans l'ordre inverse.

L'état initial (bloc 51, STATE INIT) correspond ici à un état chiffré ou crypté (Sₙ) des données.

Comme pour l'algorithme de chiffrement, on commence par combiner (bloc 61) l'état initial avec une quantité aléatoire R ayant la même taille que la donnée initiale. Puis, on combine (bloc 52, ADDROUNDKEY) l'état obtenu Sₙ+R avec la sous-clé Kn qui correspond à la dernière partie de la clé de chiffrement (dans cet exemple, le dernier octet). L'état obtenu Sₙ₋₁+R est alors soumis à n-1 cycles d'une même transformation de déchiffrement prenant en compte à chaque tour une sous-clé Ki de rang inférieur.

Les étapes successives se déduisent des étapes de chiffrement décrites précédemment :
- décalage de lignes inverse (bloc 53, INVSHIFTROWS, fonction ISR) correspondant à la transformation inverse de celle du bloc 33 ;
- combinaison de type OU-Exclusif 62 avec la quantité aléatoire R1 et la fonction 53 appliquée à la quantité aléatoire R (ISR(R)) ;
- application (bloc 54, INVSUBYTES, fonction ISB) de la table de substitution INVSBOX_{R1},_{R2} inverse à celle utilisée lors de l'étape 34 ;
- combinaison 63 de type OU-Exclusif avec les quantités R2 et R ;
- transformation inverse (bloc 55, INVMIXCOLUMNS, fonction IMC) de la transformation dite de mélange de colonnes 35 ;
- combinaison de type OU-Exclusif (bloc 56, ADDROUNDKEY) avec la sous-clé Ki de rang i ; et
- combinaison 64 de type OU-Exclusif avec la quantité aléatoire R et avec le résultat d'une transformation 55 (IMC) appliquée à cette quantité aléatoire.

Les étapes 62, 63 et 64 sont identiques aux étapes 42, 43 et 44 exécutées lors du chiffrement. Les étapes 52, 53, 54, 55 et 56 correspondent aux fonctions mises en oeuvre classiquement pour le déchiffrement de l'algorithme dont on souhaite masquer l'exécution.

A l'issue du dernier tour de cette transformation cyclique, on applique successivement des étapes 57, 58 et 59, inverses aux étapes de chiffrement 37, 38 et 39 et correspondant aux étapes classiques du procédé de déchiffrement, en intercalant les mêmes étapes de combinaison 65, 66 et 67 que lors du chiffrement.

On obtient alors la matrice résultat S₀ correspondant aux données déchiffrées.

Les quantités aléatoires (ou pseudoaléatoires) R, R1, et R2 utilisées lors du déchiffrement des données peuvent être différentes de celles utilisées lors du chiffrement. De plus, comme lors de l'exécution de l'algorithme de chiffrement, ces quantités aléatoires peuvent être différentes à chaque tour de la transformation cyclique.

Selon un mode de mise en oeuvre préféré, les quantités R1 et R2 sont identiques.

Selon une variante de réalisation, l'opération du bloc 43 (figure 5) est remplacée par un Ou-Exclusif avec la quantité R2+IMC(R). L'étape 44 est alors supprimée. De façon similaire, en figure 6, on peut supprimer l'étape 64 en modifiant l'étape 63 en introduisant R2+MC(R) au lieu de R2+R.

Bien entendu, la présente invention est susceptible de diverses variantes et modifications qui apparaîtront à l'homme de l'art. En particulier, l'invention qui a été décrite ci-dessus en relation avec l'algorithme de chiffrement de type AES pourra être transposée à tout algorithme de chiffrement dont le code d'entrée est découpé en blocs de tailles identiques pour être chiffré, chaque bloc subissant une même transformation non linéaire.

De plus, l'adaptation de l'invention et des tailles des quantités aléatoires aux tailles des données traitées et des clés utilisées est à la portée de l'homme du métier. On veillera à respecter un nombre de sous-clés correspondant aux nombres de tours et une taille de quantité aléatoire R correspondant à la taille des sous-clés, donc des blocs. Par ailleurs, les nombres indiqués comme aléatoires peuvent être issus d'un générateur pseudoaléatoire.

Enfin, l'invention s'applique quelle que soit l'utilisation faite des données chiffrées.

Un exemple particulier d'application de l'invention concerne la mise en oeuvre d'un algorithme de chiffrement/déchiffrement de type AES dans une carte à puce.

## Revendications

1. Procédé masqué de chiffrement et/ou déchiffrement, par un circuit intégré, d'un code numérique d'entrée (S₀, Sₙ) au moyen de plusieurs clés (Ki), consistant :
à découper ledit code en plusieurs blocs de données de mêmes dimensions ; et
à appliquer auxdits blocs plusieurs (n-1) tours (T) de chiffrement ou déchiffrement consistant à faire subir à chaque bloc au moins une même transformation non linéaire (SUBBYTES, INVSUBBYTES) et à combiner ultérieurement le code avec une clé (Ki) différente à chaque tour,
**caractérisé en ce qu'**il consiste à masquer les opérandes lors de l'exécution du procédé au moyen d'au moins deux nombres aléatoires (R1, R2) ayant la taille dudit code et dont tous les blocs ont la même valeur en combinant, par une fonction de type OU-Exclusif, les blocs d'entrée de la transformation non linéaire par un premier desdits nombres aléatoires (R1) et de sortie de cette transformation avec un deuxième desdits nombres aléatoires (R2).

2. Procédé selon la revendication 1, dans lequel les premier et deuxième nombres sont identiques.

3. Procédé selon la revendication 1, dans lequel le code d'entrée (S₀, Sₙ) est combiné avec un troisième nombre aléatoire (R) de même dimension que ce code.

4. Procédé selon la revendication 1, dans lequel ladite transformation non linéaire (SUBBYTES, INVSUBBYTES) consiste à utiliser une table (SBOX_{R1,R2}) de substitution des blocs du code d'entrée, calculée avec ledit deuxième nombre aléatoire (R2), ladite table (SBOX_{R1,R2}) respectant le fait que la transformation d'un code d'entrée, préalablement combiné par un OU-Exclusif avec le premier nombre aléatoire (R1), correspond au résultat de la combinaison par un OU-Exclusif de ce code d'entrée avec ledit deuxième nombre aléatoire.

5. Procédé selon l'une quelconque des revendications 1 à 4, appliqué à un algorithme de chiffrement de type AES.

6. Procédé selon la revendication 1, dans lequel ledit premier nombre aléatoire (R1) est changé à chaque tour de chiffrement.

7. Procédé selon la revendication 3, dans lequel ledit troisième nombre aléatoire (R) est changé à chaque chiffrement d'une nouvelle donnée.

8. Procédé selon la revendication 4, dans lequel ledit deuxième nombre aléatoire (R2) est changé à chaque tour de chiffrement.

9. Circuit intégré comprenant un bloc de chiffrement/déchiffrement en plusieurs tours, au moyen de plusieurs clés (Ki), d'une donnée d'entrée (S₀, Sₙ) découpée en blocs de mêmes dimensions, **caractérisé en ce qu'**il comporte :
des moyens de génération d'au moins deux nombres aléatoires (R1, R2) ayant la taille de la donnée et dont tous les blocs ont la même valeur ; et
des moyens de combinaison par une fonction du type OU-Exclusif de chaque bloc, en entrée d'une transformation non linéaire (SUBBYTES, INVSUBBYTES) mise en oeuvre par le chiffrement/ déchiffrement par un premier desdits nombres aléatoires, et en sortie de cette transformation par un deuxième desdits nombres.

10. Circuit selon la revendication 9, comprenant des moyens spécialement adaptés pour la mise en oeuvre du procédé selon l'une quelconque des revendications 1 à 8.

## Claims

1. A masked cyphering/decyphering method, by an integrated circuit, of a digital input code (S₀, Sₙ) by means of a plurality of keys (Ki), consisting of:
dividing said code into several data blocks of same dimensions; and
applying to said blocks a plurality (n-1) of turns (T) of a cyphering or decyphering consisting of submitting each block to at least one same non-linear transformation (SUBBYTES, INVSUBBYTES) and of subsequently combining the code with a different key (Ki) at each turn,
**characterized in that** it consists of masking the operands, upon execution of the method, by means of at least two random numbers (R1, R2) having the size of said code and all the blocks of which have the same value by combining, by an XOR-type function, the input blocks of said non-linear transformation by a first (R1) of said random numbers and the output blocks of said transformation with a second (R2) of said random numbers.

2. The method of claim 1, wherein said first and second numbers are identical.

3. The method of claim 1, wherein the input code (S₀, Sₙ) is combined with a third random number (R) of same dimension as the code.

4. The method of claim 1, wherein said non-linear transformation (SUBBYTES, INVSUBBYTES) consists of using a box (SBOX_{R1,R2}) of substitution of the input code blocks, calculated with said second random number (R2), said box (SBOX_{R1,R2}) respecting the fact that the transformation of an input code, previously combined by XOR with the first random number (R1), corresponds to the result of the combination by XOR of this input code with said second random number.

5. The method of any of claims 1 to 4, applied to an AES-type cyphering algorithm.

6. The method of claim 1, wherein said first random number (R1) is changed at each cyphering turn.

7. The method of claim 3, wherein said third random number (R) is changed at each cyphering of a new datum.

8. The method of claim 4, wherein said second random number (R2) is changed at each cyphering turn.

9. An integrated circuit comprising a cyphering/decyphering block, in a plurality of turns by means of a plurality (Ki) of keys, of an input datum (S₀, Sₙ) divided into blocks of same dimensions, **characterized in that** it comprises:
means for generating at least two random numbers (R1, R2) having the size of the datum, all the blocks of which have the same value; and
means for combining by an Exclusive-OR function of each block, at the input of a non-linear transformation (SUBBYTES, INVSUBBYTES) implemented by the cyphering/deciphering, by a first of said random numbers, and at the output of said transformation by a second of said numbers.

10. The circuit of claim 9, comprising means for implementing the method of any of claims 1 to 8.

## Patentansprüche

1. Maskierungs-Verschlüsseluhgs-/Entschlüsselungsverfahren eines digitalen Eingangscodes (S₀, Sₙ) mittels einer Vielzahl von Schlüsseln (Ki) durch eine integrierte Schaltung, wobei folgendes vorgesehen ist:
Unterteilung des Codes in mehrere Datenblöcke mit denselben Dimensionen; und
Anwenden einer Vielzahl (n-1) von Durchläufen (T) einer Verschlüsselung oder einer Entschlüsselung der erwähnten Blöcke, wobei jeder der Blöcke mindestens eine derselben bzw der gleichen nicht linearen Transformation (SUBBYTES, INVSUBBYTES) und darauf folgenden Kombination mit dem Code mit einem unterschiedlichen Schlüssel (Ki) bei jedem Durchlauf ausgesetzt ist,
**dadurch gekennzeichnet, dass** es folgendes aufweist:
'Maskieren' der Operanden' bei Durchführung des Verfahrens mittels' mindestens zwei Zufallszahlen (R1, R2), die die Größe des erwähnten Codes besitzen und aller Blöcke, die denselben Wert besitzen durch Kombinieren mittels einer Exklusiv-ODER-Funktion, der Eingangsblöcke der erwähnten nicht linearen Transformation durch eine erste (R1) der erwähnten Zufallszahlen und der Ausgangsblöcke der erwähnten Transformation mit einer zweiten (R2) der erwähnten Zufallszahlen

2. Verfahren nach Anspruch 1, wobei die ersten und zweiten Zahlen identisch sind

3. Verfahren nach Anspruch 1, wobei der Eingangscode (S₀, Sₙ) mit einer dritten Zufallszahl (R) der gleichen Dimension wie der Code kombiniert wird.

4. Verfahren nach Anspruch 1, wobei die erwähnte nicht lineare Transformation (SUBBYTES, INVSUBBYTES) aus folgendem besteht:
Verwendung einer Box (SBOX_{R1 R2}) der Substitution der Eingangscodeblöcke, berechnet mit der erwähnten zweiten Zufallszahl (R2), wobei die erwähnte Box (SBOX_{R1}, _{R2}) die Tatsache respektiert, dass die Transformation des Eingangscodes zuvor kombiniert durch Exklusiv-ODER mit der ersten Zufallszahl (R1) dem Ergebnis der Kombination durch Exklusiv-ODER dieses Eingangscodes mit der zweiten Zufallszahl entspricht

5. Verfahren nach irgendeinem der Ansprüche 1 bis 4, angewandt bei einem Verschlüsselungsalgorithmus des AES-Typs

6. Verfahren nach Anspruch 1, wobei die erste Zufallszahl (R1) bei jedem Verschlüsselungsdurchlauf geändert wird

7. Verfahren nach Anspruch 3, wobei die dritte Zufallszahl (R) bei jeder Verschlüsselung eines neuen Datums geändert wird

8. Verfahren nach Anspruch 4, wobei die zweite Zufallszahl (R2) bei jedem Verschlüsselungsdurchlauf geändert wird

9. Eine integrierte Schaltung, die folgendes aufweist:
einen Verschlüsselungs-/Entschlüsselungsblock mit einer Vielzahl von Durchläufen mittels einer Vielzahl von Schlüsseln (Ki), und zwar eines Eingangsdatums (S₀, Sₙ) unterteilt in Blöcke derselben Dimensionen, **dadurch gekennzeichnet, dass** folgendes vorgesehen ist:
Mittel zur Erzeugung von mindestens zwei Zufallszahlen (R1, R2) mit einer Größe des Datums, wobei alle Blöcke den gleichen Wert besitzen; und
Mittel zum Kombinieren der Exklusiv-ODER-Funktion jedes Blockes am Eingang der nicht linearen Transformation (SUBBYTES, INVSUBBYTES) implementiert durch das Verschlüsseln/Entschlüsseln, und zwar durch eine erste der Zufallszahlen, und an dem Ausgang der Transformation durch eine zweite der Zahlen.

10. Schaltung nach Anspruch 9, wobei Mittel vorgesehen sind zum Implementieren des Verfahrens nach irgendeinem der Ansprüche 1 bis 8
